# EUROPÄISCHE PATENTSCHRIFT

(11) **EP 1 743 093 B1**
(45) Veröffentlichungstag und Bekanntmachung des Hinweises auf die Patenterteilung: **20.01.2010**
(21) Anmeldenummer: 05857303.1
(22) Anmeldetag: 17.02.2005
(51) Int. Cl.: F02D 41/14, F02D 37/02, F02P 5/153, F02P 5/145

(54) **VERFAHREN UND VORRICHTUNG ZUR REGELUNG DES VERBRENNUNGSABLAUFS IN EINEM VERBRENNUNGSMOTOR**
PROCESS AND DEVICE FOR REGULATING THE COURSE OF COMBUSTION IN AN INTERNAL COMBUSTION ENGINE
PROCEDE ET DISPOSITIF DE REGULATION DU PROCESSUS DE COMBUSTION DANS UN MOTEUR A COMBUSTION INTERNE

(30) Priorität: 19.04.2004 DE 102004018855
(43) Veröffentlichungstag der Anmeldung: 17.01.2007
(73) Patentinhaber: Volkswagen Aktiengesellschaft, 38436 Wolfsburg (DE)
(72) Erfinder: SCHNELL, Hartmut, 38518 Gifhorn (DE); HAMMER, Gerd, 38350 Helmstedt (DE)
(74) Vertreter: Banzer, Hans-Jörg
(86) Internationale Anmeldenummer: PCT/EP2005/001626
(87) Internationale Veröffentlichungsnummer: WO 2006/094517

(56) Entgegenhaltungen:
- WO-A-03/085244
- GB-A- 2 397 623

## Beschreibung

Die vorliegende Erfindung betrifft ein Verfahren sowie eine entsprechend ausgestaltete Vorrichtung zur Regelung des Verbrennungsablaufs in einem Verbrennungsmotor, insbesondere zur Regelung des Verbrennungsablaufs mit Hilfe einer Ionenstrommessung.

Bei Brennkraftmaschinen, wie insbesondere Otto- oder Dieselmotoren für Kraftfahrzeuge, wird bekannterweise die Verbrennung in einem Brennraum bzw. Zylinder gemessen, um in Abhängigkeit von einem entsprechenden Messsignal auf zumindest einen Parameter zur Regelung des Verbrennungsablaufs einzuwirken. Herkömmliche Motorsteuerungen haben dabei im Wesentlichen die Aufgabe, die drei grundlegenden Parameter Füllung, Einspritzung und Zündung zu regeln. Zur Überwachung bzw. Messung der Verbrennung ist es bekannt, in dem jeweiligen Brennraum ein Zylinderdrucksignal oder ein Ionenstromsignal aufzunehmen und dieses auszuwerten. Alternativ können auch lichtsensitive Messsensoren Verwendung finden.

Im Verlauf der letzten Jahre ist die Bedeutung der Ionenstrommessung gestiegen, da Studien gezeigt haben, dass das in einem Brennraum aufgenommene Ionenstromsignal genutzt werden kann, um den Druck in dem Brennraum (Zylinderdruck) und das lokale λ zu bestimmen und somit den Verbrennungsablauf in dem Verbrennungsmotor zu überwachen. Das lokale λ gibt Auskunft über das Luft/Kraftstoff-Verhältnis an einem bestimmten lokalen Punkt in dem jeweiligen Brennraum.

In der DE 196 05 801 A1 ist ein lonenstrom-Messsystem für einen Brennraum eines Ottomotors beschrieben, wobei die für den Brennraum vorgesehene Zündkerze zugleich als Ionenstrom-Messsensor verwendet wird. Das auf diese Weise aufgenommene Ionenstromsignal kann genutzt werden, um das so genannte Klopfen des entsprechenden Motors zu detektieren und über eine geeignete Steuerung des Zündzeitpunkts eine entsprechende Klopfregelung aufzubauen. Darüber hinaus wird in dieser Druckschrift vorgeschlagen, das Ionenstromsignal zur Erkennung von Zündaussetzern oder zur Erkennung der Nockenwellenstellung zu verwenden.

Auch aus der Druckschrift DE 196 81 269 A1 ist ein Verfahren zur Klopfregelung in einem Verbrennungsmotor beschrieben, wobei ein Ionenstromsignal in einem Brennraum des Verbrennungsmotors aufgenommen wird, aus dem ein charakteristischer Frequenzanteil ausgefiltert wird, der repräsentativ für einen Klopfzustand ist. Die Intensität des ausgefilterten Frequenzanteils ist abhängig von der Stärke des Klopfzustandes, wodurch ein Klopfzustand festgestellt werden kann, wenn die Intensität des ausgefilterten Frequenzanteils einen vorbestimmten Schwellenwert übersteigt. Bei Feststellung des Klopfzustands kann auf einzelne oder mehrere Parameter, wie beispielsweise Zündzeitpunkt, Kraftstoffmenge oder Ladedruck, eingewirkt werden, um den Klopfzustand zu beseitigen. Das in dem Brennraum aufgenommene Ionenstromsignal wird während eines Messfensters aufintegriert und über mehrere Verbrennungszyklen des Brennraums gemittelt, um aus dem integrierten und gemittelten Signal ein Steuersignal zur Regelung der zuvor beschriebenen Parameter und somit zur Regelung des Verbrennungsablaufs während eines späteren Verbrennungszyklus zu erzeugen.

Die WO 03/085244 offenbart ein Verfahren gemäß dem Oberbegriff des Anspruchs 1.

Aus dem Stand der Technik ist somit bereits zur Regelung des Verbrennungsablaufs in einem Verbrennungsmotor bekannt, über mehrere Verbrennungszyklen eines Brennraums ein entsprechendes Ionenstromsignal aufzunehmen und zu mitteln, um aus dem gemittelten Signal ein Steuersignal für mindestens einen Parameter des Brennraums, wie beispielsweise den Zündzeitpunkt oder den Zündwinkel, zu generieren, so dass auf diese Weise auf einen nachfolgenden Verbrennungsablauf in dem Brennraum eingewirkt werden kann. Bisher bekannte Systeme für Kraftfahrzeuganwendungen können somit den optimalen Zündwinkel eines Brennraums nur über eine statistische Auswertung des Ionenstromsignals über mehrere Verbrennungszyklen ermitteln und adaptieren, was wie jedoch insbesondere bei Verbrennungsmotoren mit einer relativ großen Anzahl von Brennräumen bzw. Zylindern aufwändig ist, da zwischen den einzelnen Brennräumen in der Regel eine starke Streuung zwischen den Betriebsbedingungen, wie beispielsweise Füllung oder Temperatur, auftreten kann. Zudem erfordert die gemittelte Auswertung des Ionenstromsignals eine entsprechende Rechenleistung des hierfür in einem Kraftfahrzeug vorgesehenen Motorsteuergeräts und setzt darüber hinaus einen quasi stationären Betrieb des Verbrennungsmotors voraus, was jedoch in der Praxis nicht gegeben ist.

Der vorliegenden Erfindung liegt daher die Aufgabe zugrunde, ein Verfahren und eine Vorrichtung zur Regelung des Verbrennungsablaufs in einem Verbrennungsmotor bereitzustellen, womit die zuvor beschriebenen Probleme beseitigt werden können und insbesondere mittels Ionenstrommessung auf einfache Art und Weise eine präzise Regelung des Verbrennungsablaufs in den einzelnen Brennräumen eines Verbrennungsmotors möglich ist.

Diese Aufgabe wird erfindungsgemäß durch ein Verfahren mit den Merkmalen des unabhängigen Anspruches 1 bzw. eine Vorrichtung mit den Merkmalen des unabhängigen Anspruches 8 gelöst. Die abhängigen Ansprüche definieren jeweils bevorzugte und vorteilhafte Ausführungsformen der vorliegenden Erfindung.

Erfindungsgemäß wird eine verbrennungszyklusselektive Regelung des Verbrennungsablaufs in einem Brennraum eines Verbrennungsmotors vorgeschlagen, d.h. eine Durchführung einer Ionenstrommessung mit nachfolgender Auswertung des somit erhaltenen Ionenstromsignals wird verbrennungszyklusindividuell für jeden einzelnen Verbrennungszyklus in dem jeweiligen Brennraum des Verbrennungsmotors durchgeführt, so dass in Abhängigkeit von dem während eines Verbrennungszyklus erfassten und ausgewerteten Ionenstromsignals auf die Verbrennung in dem unmittelbar nachfolgenden Verbrennungszyklus desselben Brennraums eingewirkt werden kann, d.h. eine Mittelung über mehrere Verbrennungszyklen findet nicht statt.

Zur Regelung des Verbrennungsablaufs in dem nachfolgenden Verbrennungszyklus kann auf mindestens einen Parameter in Abhängigkeit von dem ausgewerteten Ionenstromsignal des unmittelbar vorhergehenden Verbrennungszyklus eingewirkt werden, wobei als Parameter die Füllung, die Einspritzung und/oder die Zündung - vorzugsweise abhängig von dem jeweiligen Motorbetriebspunkt - eingestellt werden kann.

Gemäß einem bevorzugten Ausführungsbeispiel der vorliegenden Erfindung erfolgt eine verbrennungszyklusindividuelle Regelung des Zündwinkels im Brennraum des Verbrennungsmotors gestützt auf eine durch die Ionenstromauswertung ermittelte kurbelwinkelbasierte Verbrennungsspitzendrucklage.

Ebenso erfolgt vorzugsweise die verbrennungszyklusindividuelle Regelung brennraumselektiv, d.h. individuell für jeden einzelnen Brennraum bzw. Zylinder des Verbrennungsmotors.

Die vorliegende Erfindung ermöglicht es somit dem zur Verbrennungsregelung vorgesehenen Motorsteuergerät des jeweiligen Kraftfahrzeugs, innerhalb der augenblicklich vorliegenden Randbedingungen stets einen optimalen Zündwinkel (sowohl mit als auch ohne Klopfregelung) zu ermitteln, wobei aufgrund der Tatsache, dass auf eine Mittelung über mehrere Verbrennungszyklen verzichtet werden kann, eine deutlich schnellere Wirksamkeit der Regelung bei reduzierter Rechenleistung möglich ist, so dass sich die erfindungsgemäße Regelung insbesondere auch für einen transienten Motorbetrieb eignet. Die Auswertung des Ionenstromsignals kann dabei vorzugsweise in relativ kleinen Kurbelwellenwinkelschritten erfolgen, wobei das dabei zur Anwendung kommende Kurbelwellenwinkel-Inkrement insbesondere kleiner als 1° KW, vorzugsweise kleiner oder gleich 0,75° KW, sein kann.

Die vorliegende Erfindung eignet sich bevorzugt zur zylinderselektiven Regelung des Verbrennungsablaufs in Verbrennungsmotoren mit einer relativ großen Anzahl von Zylindern, beispielsweise zwölf Zylinder, wobei die vorliegende Erfindung vorzugsweise zur Regelung des Verbrennungsablaufs in Ottomotoren eingesetzt werden kann, ohne jedoch auf diesen bevorzugten Anwendungsbereich beschränkt zu sein.

Die vorliegende Erfindung wird nachfolgend unter Bezugnahme auf die beigefügte Zeichnung anhand eines bevorzugten Ausführungsbeispiels näher erläutert.
Fig. 1 zeigt schematisch den Aufbau einer erfindungsgemäßen Vorrichtung zur zylinderselektiven Regelung des Verbrennungsablaufs in einem Verbrennungsmotor,
Fig. 2 zeigt einen beispielhaften Aufbau einer lonenstrommess- und Auswertungsanordnung für einen der Brennräume bzw. Zylinder der in Fig. 1 dargestellten Vorrichtung, und
Fig. 3 zeigt einen beispielhaften Verlauf zur Erläuterung der Auswertung eines mit einer Anordnung gemäß Fig. 2 aufgenommenen Ionenstromsignals, wobei das Ionenstromsignal in Fig. 3 zusammen mit einem in demselben Brennraum auftretenden Brennraumdrucksignal dargestellt ist.

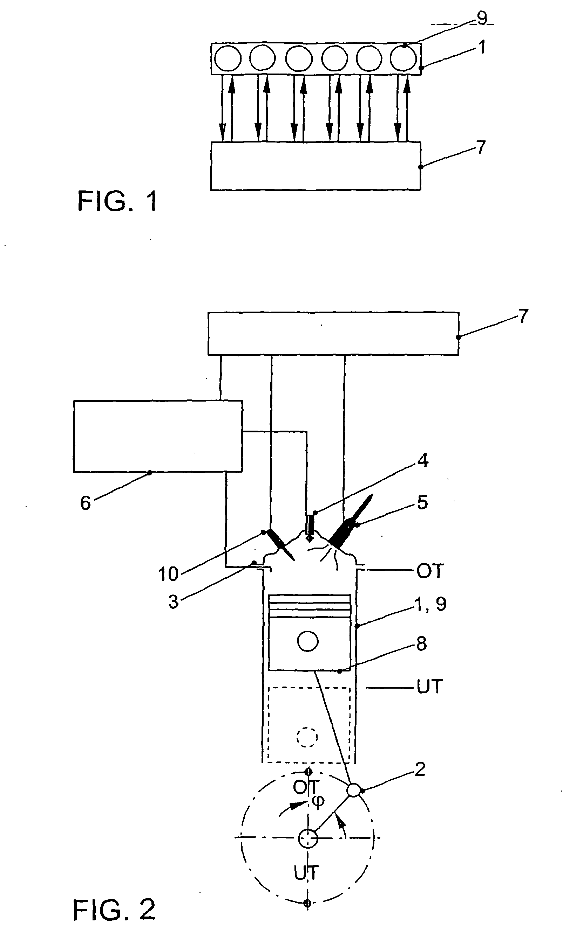

In Fig. 1 ist ein Verbrennungsmotor 1, beispielsweise ein Ottomotor, mit einer Vielzahl von Zylindern bzw. Brennräumen 9 dargestellt, wobei in Fig. 1 beispielhaft sechs derartige Brennräume gezeigt sind. Dem Verbrennungsmotor 1 ist ein Motorsteuergerät 7 zugeordnet, welches als Steuermittel zur Regelung von Parametern des Verbrennungsmotors 1 vorgesehen ist, um den Verbrennungsablauf in den einzelnen Brennräumen 9 zu regeln. Hierzu wertet das Motorsteuergerät 7 externe und interne Messgrößen des Verbrennungsmotors 1 aus, um nach Auswertung dieser Messgrößen auf geeignete Art und Weise auf die Verbrennungsabläufe in den einzelnen Brennräumen 9 einwirken zu können. Wie in Fig. 1 gezeigt ist, erfolgt die Regelung des Verbrennungsablaufs für jeden Brennraum 9 individuell, wobei von dem Motorsteuergerät 7 vorzugsweise Messgrößen jedes einzelnen Brennraums 9 ausgewertet werden, um für jeden einzelnen Brennraum 9 mindestens ein Steuersignal für mindestens einen Parameter, welcher den Verbrennungsablauf in dem jeweiligen Brennraum 9 beeinflusst, zu erzeugen. Im Rahmen der vorliegenden Erfindung wird davon ausgegangen, dass in jedem Brennraum 9 des Verbrennungsmotors 1 Sensormittel zum Erfassen eines in dem jeweiligen Brennraum während eines Verbrennungszyklus auftretenden Ionenstroms vorgesehen sind. Das Messgerät 7 wertet somit als eine der zuvor beschriebenen Messgrößen den in den einzelnen Brennräumen 9 auftretenden Ionenstrom aus, um davon abhängig die Parameter, welche den Verbrennungsablauf in dem jeweiligen Brennraum 9 beeinflussen, auf geeignete Art und Weise einzustellen, wobei diese Parameter im weitesten Sinne die Füllung, Einspritzung und/oder Zündung für den jeweiligen Brennraum 9 betreffen können. Insbesondere kann auf diese Weise das Motorsteuergerät 7 für jeden einzelnen Brennraum 9 einen geeigneten Zündzeitpunkt in Form eines auf die Kurbelwellenstellung bezogenen Zündwinkels oder einen geeigneten Einspritzzeitpunkt für das jeweilige Luft/Kraftstoff-Gemisch einstellen.

In Fig. 2 ist ein möglicher Aufbau einer lonenstrom-Messanordnung dargestellt, wie sie für jeden der in Fig. 1 dargestellten Brennräume 9 des Verbrennungsmotors 1 zum Einsatz kommen kann. Ein in dem jeweiligen Brennraum 1 befindlicher Kolben 8 ist mit einer Kurbelwelle 2 des Verbrennungsmotors gekoppelt. Wird beispielsweise angenommen, dass der Verbrennungsmotor mit vier Takten arbeitet, so erreicht die Kurbelwelle 2 und der Kolben 8 innerhalb eines Arbeitszyklus genau zweimal den so genannten oberen Totpunkt OT und den unteren Totpunkt UT, was zwei vollständigen Umdrehungen der Kurbelwelle 2 entspricht. In der Kraftfahrzeugtechnik werden die Drehwinkel ϕ der Kurbelwelle 2 in Grad Kurbelwinkel (° KW) angegeben.

Im Bereich des Zylinderkopfs oder der Zylinderkopfdichtung ist mindestens ein Ionenstromsensor angeordnet, wobei über mindestens eine Kathode 3 und Anode 4 der im Brennraum 9 während eines Verbrennungszyklus auftretende Ionenstrom erfasst und einer lonenstrom-Auswertungseinheit 6 zugeführt wird. Als Ionenstromsensor kann insbesondere die dem Brennraum zugeordnete Zündkerze verwendet werden. Ebenso ist die Verwendung einer Glühstiftkerze oder die Anordnung entsprechender Sensoren im Zylinderkopf oder in der Zylinderkopfdichtung möglich.

Die lonenstrom-Auswertungseinheit 6 wertet den erfassten Ionenstrom aus und schließt davon abhängig auf den augenblicklichen Verbrennungszustand im Brennraum 9. Abhängig von dem Auswertungsergebnis der lonenstrom-Auswertungseinheit 6 erzeugt das Motorsteuergerät 7 ein Steuersignal, um auf den Verbrennungsvorgang während eines nachfolgenden Verbrennungszyklus einzuwirken, wobei in Fig. 2 beispielhaft die Ansteuerung eines Einspritzventils 5 des Verbrennungsmotors 1, um die dem jeweiligen Brennraum 9 zugeführte Luft/Kraftstoff-Gemischzusammensetzung entsprechend zu beeinflussen, und die Ansteuerung einer dem Brennraum 9 zugeordneten Zündkerze 10 zum Entzünden des in dem Brennraum 9 befindlichen Luft/Kraftstoff-Gemisches, um den Zündzeitpunkt und die Zünddauer entsprechend zu beeinflussen, dargestellt ist.

Die Ionenstrom-Auswertungseinheit 6 ist lediglich zur Verdeutlichung in Fig. 2 separat von dem Motorsteuergerät 7 dargestellt. In der Regel ist die Funktionalität der Ionenstrom-Auswertungseinheit 6 in das Motorsteuergerät 7 integriert.

Wie aus Fig. 2 ersichtlich ist, wird von dem Motorsteuergerät 7 bzw. der lonenstrom-Auswertungseinheit 6 ein Ionenstromsignal während eines Verbrennungszyklus des jeweiligen Brennraums 9 erfasst und ausgewertet, wobei das Ionenstromsignal in Abhängigkeit von dem Kurbelwellenwinkel ϕ, d.h. in Abhängigkeit von der Position der Kurbelwelle 2, aufgenommen wird. Das während eines Verbrennungszyklus aufgenommene Ionenstromsignal entspricht somit einer Kurve über den Kurbelwellenwinkel ϕ. Das Maximum dieser Kurve entspricht dem Maximum der während dieses Verbrennungszyklus in dem Brennraum 9 auftretenden thermischen Ionisation, welches in der Regel mit dem Brennraumdruckmaximum in demselben Brennraum 9 (bezogen auf die Kurbelwellenposition bzw. den Kurbelwellenwinkel) zusammenfällt.

Dieser Zusammenhang kann ausgenutzt werden, um durch Auswertung des Ionenstromsignals auf den Verbrennungsablaufs in dem jeweiligen Brennraum zu schließen und entsprechend auf die zuvor erwähnten Parameter, welche den Verbrennungsablauf beeinflussen, einzuwirken, um während eines nachfolgenden Verbrennungszyklus den Verbrennungsablauf zu optimieren.

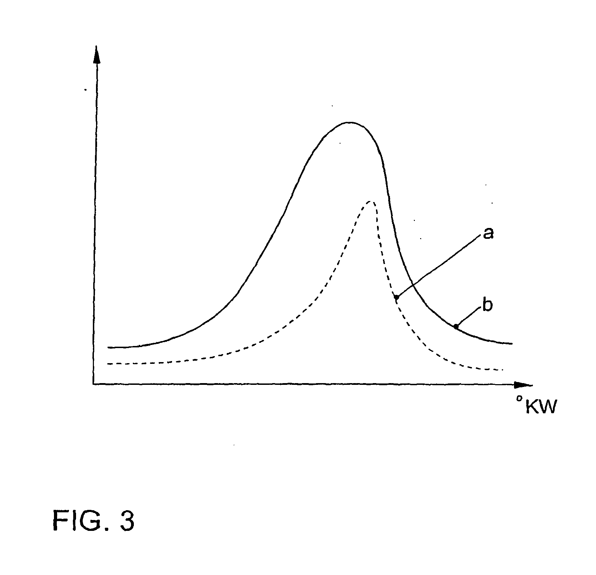

Dies soll nachfolgend kurz anhand von Fig. 3 erläutert werden.

In Fig. 3 ist beispielhaft der Verlauf der Amplitude eines Ionenstromsignals während eines Verbrennungszyklus in einem Brennraum eines Verbrennungsmotors in Abhängigkeit von der Kurbelwellenposition bzw. den Kurbelwellenwinkeln aufgetragen (Kurve a). Ebenso ist in Fig. 3 der entsprechende Verlauf des Brennraumdrucks in demselben Brennraum des Verbrennungsmotors in Abhängigkeit von dem Kurbelwellenwinkel aufgetragen (Kurve b). Wie aus Fig. 3 ersichtlich ist, liegen die Kurbelwellenpositionen der Maxima der beiden Kurven nahe beieinander. Wird nun im Zuge einer Auswertung des Ionenstromsignals von dem Motorsteuergerät 7 festgestellt, dass die Kurbelwellenposition des Maximums des Ionenstromsignals außerhalb eines vorgegebenen Toleranzbereichs von der Kurbelwellenposition des Maximums des Brennraumdrucksignals liegt, greift das Steuergerät 7 auf die zuvor erwähnten Parameter, welche den Verbrennungsablauf in dem Brennraum beeinflussen, ein, um beispielsweise den Zündzeitpunkt entsprechend anzupassen und eine möglichst gute Annäherung der Kurbelwellenpositionen der Maxima der beiden Kurven in dem nachfolgenden Verbrennungszyklus zu erzielen. Hierzu kann insbesondere von dem Motorsteuergerät 7 der Zündwinkel des jeweiligen Brennraums 9, d.h. der Zündzeitpunkt bezogen auf die Kurbelwellenposition bzw. den Kurbelwellenwinkel, angepasst werden.

Die zuvor beschriebene Verbrennungsregelung wird dabei insbesondere verbrennungszyklusindividuell durchgeführt, d.h. jeder einzelne Verbrennungszyklus wird ausgewertet, um ein Steuersignal für den unmittelbar nachfolgenden Verbrennungszyklus zu gewinnen. Zudem erfolgt diese Auswertung und Regelung brennraumindividuell, d.h. für jeden einzelnen Brennraum 9 des Verbrennungsmotors 1 separat. Dies bedeutet, dass beispielsweise die zuvor beschriebene Verbrennungsauswertung in Form einer IonenstromAuswertung für den Brennraum Nr. 4 des Verbrennungsmotors 1 durchgeführt wird, wobei die Auswertung bis zum nächsten Verbrennungszyklus im Brennraum Nr. 4 bereits abgeschlossen ist und somit für den nächsten Verbrennungsvorgang bzw. Verbrennungszyklus in dem Brennraum Nr. 4 des Verbrennungsmotors 1 berücksichtigt werden kann.

Die zuvor beschriebene Vorgehensweise erfordert eine entsprechend rasche und schnelle Auswertung der Ionenstromsignale der einzelnen Brennräume 9 des Verbrennungsmotors 1, wobei hierzu eine entsprechend hohe Kurbelwellenwinkel-Auflösung bei der Auswertung jeder einzelnen Kurve a eines Ionenstromsignals (vgl. Fig. 3) zur Anwendung kommt. Die Ionenstromsensoren sowie die lonenstrom-Auswertungseinheit 6 und das Motorsteuergerät 7 sind vorzugsweise derart ausgestaltet, dass sie mit Inkrementen kleiner 1 ° KW, vorzugsweise kleiner oder gleich 0,75° KW arbeiten können.

Wie bereits zuvor beschrieben worden ist, erfolgt die Verbrennungsregelung vorzugsweise nicht nur verbrennungszyklusindividuell, sondern auch brennraumindividuell, da der Verbrennungsmotor hinsichtlich seiner Füllung und Temperaturen relativ stark zwischen den einzelnen Brennräumen 9 streut, so dass sich abhängig von den Betriebsbedingungen für jeden Brennraum 9 unterschiedlich optimale Zündzeitpunkte ergeben können. Insbesondere ist zu beachten, dass bei einer relativ hohen Füllung ein späterer Zündzeitpunkt anzustreben ist, um ein Klopfen des Verbrennungsmotors zu vermeiden, während bei einer geringeren Füllung ein früherer Zündzeitpunkt eingestellt werden kann. Durch eine brennraumindividuelle Verbrennungsregelung kann gewährleistet werden, dass für jeden einzelnen Brennraum 9. des in Fig. 1 gezeigten Verbrennungsmotors 1 beispielsweise ein jeweils optimaler Zündwinkel abhängig von den augenblicklichen Betriebsbedingungen ermittelt und eingestellt werden kann.

### BEZUGSZEICHENLISTE

- 1: Verbrennungsmotor
- 2: Kurbelwelle
- 3: Kathode
- 4: Anode
- 5: Einspritzventil
- 6: lonenstrom-Auswertungseinheit
- 7: Motorsteuergerät
- 8: Kolben
- 9: Brennraum
- 10: Zündkerze
- OT: oberer Totpunkt der Kurbelwelle
- UT: unterer Totpunkt der Kurbelwelle
- ϕ: Kurbelwellenwinkel
- a: Ionenstrom-Kurve
- b: Brennraumdruck-Kurve

## Patentansprüche

1. Verfahren zur Regelung des Verbrennungsablaufs in einem Verbrennungsmotor, umfassend die Schritte
(a) Durchführung einer Ionenstrommessung in mindestens einem Brennraum (9) des Verbrennungsmotors (1) während eines Verbrennungszyklus in dem Brennraum (9), um ein entsprechendes Ionenstromsignal (a) zu erhalten,
(b) Auswerten des durch die Ionenstrommessung erhaltenen Ionenstromsignals (a), und
(c) Erzeugung mindestens eines Steuersignals in Abhängigkeit von dem ausgewerteten Ionenstromsignal (a) zur Regelung des Verbrennungsablaufs in dem Brennraum (9) des Verbrennungsmotors (1) während eines nachfolgenden Verbrennungszyklus,
**dadurch gekennzeichnet,**
**dass** die Ionenstrommessung und die Auswertung des **dadurch** erhaltenen Ionenstromsignals (a) jeweils für jeden einzelnen Verbrennungszyklus des Brennraums (9) des Verbrennungsmotors durchgeführt werden.

2. Verfahren nach Anspruch 1,
**dadurch gekennzeichnet,**
**dass** im Schritt (c) das Steuersignal zur Regelung des Verbrennungsablaufs in dem Brennraum (9) für denjenigen Verbrennungszyklus erzeugt wird, welcher dem Verbrennungszyklus, für den in den Schritten (a) und (c) bezüglich desselben Brennraums (9) die Ionenstrommessung und die Auswertung des dabei erhaltenen Ionenstromsignals (a) durchgeführt worden ist, unmittelbar folgt.

3. Verfahren nach Anspruch 2,
**dadurch gekennzeichnet,**
**dass** das mindestens eine Steuersignal im Schritt (c) auf Grundlage der im Schritt (b) durchgeführten Auswertung des Ionenstromsignals (a) ohne Mittelung über mehrere Verbrennungszyklen des Brennraums (9) erzeugt wird.

4. Verfahren nach einem der vorhergehenden Ansprüche,
**dadurch gekennzeichnet,**
**dass** das Steuersignal zur Regelung eines Zündzeitpunkts für den nachfolgenden Verbrennungszyklus verwendet wird.

5. Verfahren nach einem der vorhergehenden Ansprüche,
**dadurch gekennzeichnet,**
**dass** das Steuersignal zur Regelung eines Zündwinkels für den nachfolgenden Verbrennungszyklus verwendet wird.

6. Verfahren nach einem der vorhergehenden Ansprüche,
**dadurch gekennzeichnet,**
**dass** im Schritt (c) das mindestens eine Steuersignal zur Regelung des Verbrennungsablaufs in dem Brennraum (9) während des nachfolgenden Verbrennungszyklus derart erzeugt wird, dass **dadurch** ein Maximum eines auf einen Kurbelwellenwinkel (ϕ) des Verbrennungsmotors (1) bezogenen Brennraumdrucksignals (b) an ein Maximum des auf den Kurbelwellenwinkel (ϕ) bezogenen Ionenstromsignals (a) angenähert wird.

7. Verfahren nach einem der vorhergehenden Ansprüche,
**dadurch gekennzeichnet,**
**dass** das Verfahren zur Regelung des Verbrennungsablaufs für jeden einzelnen Brennraum (9) des Verbrenriungsmotors (1) individuell durchgeführt wird.

8. Vorrichtung zur Regelung des Verbrennungsablaufs in einem Verbrennungsmotor, mit Ionenstrom-Sensormitteln (3, 4) zum Erfassen eines während eines Verbrennungszyklus in mindestens einem Brennraum (9) des Verbrennungsmotors (1) auftretenden Ionenstroms, um ein entsprechendes Ionenstromsignal (a) zu erhalten, und mit Steuermitteln (6, 7) zur Auswertung des erhaltenen Ionenstromsignals (a) und zur Erzeugung mindestens eines Steuersignals in Abhängigkeit von dem Ionenstromsignal (a) zur Regelung des Verbrennungsablaufs in dem Brennraum (9) während eines nachfolgenden Verbrennungszyklus,
**dadurch gekennzeichnet,**
**dass** die Vorrichtung derart ausgestaltet ist, dass die Ionenstrommessung und die Auswertung des **dadurch** erhaltenen Ionenstromsignals (a) jeweils für jeden einzelnen Verbrennungszyklus des Brennraums (9) des Verbrennungsmotors durchgeführt werden.

9. Vorrichtung nach Anspruch 8,
**dadurch gekennzeichnet,**
**dass** die Vorrichtung zur Durchführung des Verfahrens nach einem der Ansprüche 1-7 ausgestaltet ist.

## Claims

1. Method for regulating the course of combustion in an internal combustion engine,
comprising the steps
(a) an ion current measurement is carried out in at least one combustion chamber (9) of the internal combustion engine (1) during a combustion cycle in the combustion chamber (9) in order to obtain a corresponding ion current signal (a),
(b) the ion current signal (a) which is obtained by means of the ion current measurement is evaluated, and
(c) at least one control signal is generated as a function of the evaluated ion current signal (a) in order to regulate the course of combustion in the combustion chamber (9) of the internal combustion engine (1) during a subsequent combustion cycle,
**characterized**
**in that** the ion current measurement and the evaluation of the ion current signal (a) which is obtained thereby are respectively carried out for each individual combustion cycle of the combustion chamber (9) of the internal combustion engine.

2. Method according to Claim 1,
**characterized**
**in that** in step (c) the control signal for regulating the course of combustion in the combustion chamber (9) is generated for that combustion cycle which directly follows the combustion cycle for which the ion current measurement and the evaluation of the ion current signal (a) obtained in the process has been carried out in steps (a) and (c) with respect to the same combustion chamber (9).

3. Method according to Claim 2,
**characterized**
**in that** the at least one control signal in step (c) is generated on the basis of the evaluation of the ion current signal (a) carried out in step (b), without averaging over a plurality of combustion cycles of the combustion chamber (9).

4. Method according to one of the preceding claims,
**characterized**
**in that** the control signal is used to regulate an ignition time for the subsequent combustion cycle.

5. Method according to one of the preceding claims,
**characterized**
**in that** the control signal is used to regulate an ignition angle for the subsequent combustion cycle.

6. Method according to one of the preceding claims,
**characterized**
**in that** in step (c) the at least one control signal for regulating the course of combustion in the combustion chamber (9) during the subsequent combustion cycle is generated in such a way that as a result a maximum value of a combustion chamber pressure signal (b) which is referred to a crankshaft angle (ϕ) of the internal combustion engine (1) is approximated to a maximum of the ion current signal (a) which is referred to the crankshaft angle (ϕ).

7. Method according to one of the preceding claims,
**characterized**
**in that** the method for regulating the course of combustion is carried out individually for each individual combustion chamber (9) of the internal combustion engine (1).

8. Device for regulating the course of combustion in an internal combustion engine, having ion current sensor means (3, 4) for detecting an ion current which occurs during a combustion cycle in at least one combustion chamber (9) of the internal combustion engine (1), in order to obtain a corresponding ion current signal (a), and having control means (6, 7) for evaluating the ion current signal (a) obtained and for generating at least one control signal as a function of the ion current signal (a) for regulating the course of combustion in the combustion chamber (9) during a subsequent combustion cycle,
**characterized**
**in that** the device is configured in such a way that the ion current measurement and the evaluation of the ion current signal (a) obtained as a result are respectively carried out for each individual combustion cycle of the combustion chamber (9) of the internal combustion engine.

9. Device according to Claim 8,
**characterized**
**in that** the device is configured for carrying out the method according to one of Claims 1-7.

## Revendications

1. Procédé de régulation du déroulement de la combustion d'un moteur à combustion interne, comprenant les étapes suivantes :
a) Réalisation d'une mesure du flux ionique dans au moins une chambre de combustion (9) du moteur à combustion interne (1) pendant un cycle de combustion dans la chambre de combustion (9) afin d'obtenir un signal de flux ionique (a) correspondant,
b) Interprétation du signal de flux ionique (a) obtenu par la mesure du flux ionique, et
c) Génération d'au moins un signal de commande en fonction du signal de flux ionique (a) interprété afin de réguler le déroulement de la combustion dans la chambre de combustion (9) du moteur à combustion interne (1) pendant un cycle de combustion qui suit,
**caractérisé en ce**
**que** la mesure du flux ionique et l'interprétation du signal de flux ionique (a) ainsi obtenu sont respectivement effectuées pour chaque cycle de combustion individuel de la chambre de combustion (9) du moteur à combustion interne.

2. Procédé selon la revendication 1, **caractérisé en ce que** dans l'étape c), le signal de commande destiné à réguler le déroulement de la combustion dans la chambre de combustion (9) est généré pour le cycle de combustion qui suit immédiatement le cycle de combustion pendant lequel ont été effectuées, au cours des étapes a) et c) et en rapport avec sa chambre de combustion (9), la mesure du flux ionique et l'interprétation du signal de flux ionique (a) alors obtenu.

3. Procédé selon la revendication 2, **caractérisé en ce que** l'au moins un signal de commande à l'étape c) est généré sur la base de l'interprétation du signal de flux ionique (a) effectuée à l'étape b) sans calcul de la moyenne sur plusieurs cycles de combustion de la chambre de combustion (9).

4. Procédé selon l'une des revendications précédentes, **caractérisé en ce que** le signal de commande est utilisé pour réguler un moment d'allumage pour le cycle de combustion suivant.

5. Procédé selon l'une des revendications précédentes, **caractérisé en ce que** le signal de commande est utilisé pour réguler un angle d'allumage pour le cycle de combustion suivant.

6. Procédé selon l'une des revendications précédentes, **caractérisé en ce qu'**à l'étape c), l'au moins un signal de commande destiné à réguler le déroulement de la combustion dans la chambre de combustion (9) pendant le cycle de combustion qui suit est généré de telle sorte qu'un maximum d'un signal de compression (b) de la chambre de combustion rapporté à un angle de vilebrequin (ϕ) du moteur à combustion interne (1) est ainsi rapproché d'un maximum d'un signal de flux ionique (a) rapporté à l'angle de vilebrequin (ϕ).

7. Procédé selon l'une des revendications précédentes, **caractérisé en ce que** le procédé de régulation du déroulement de la combustion est exécuté individuellement pour chaque chambre de combustion (9) individuelle du moteur à combustion interne (1).

8. Dispositif de régulation du déroulement de la combustion dans un moteur à combustion interne, comprenant des moyens de détection de flux ionique (3, 4) pour détecter un flux ionique qui se produit pendant un cycle de combustion dans au moins une chambre de combustion (9) du moteur à combustion interne (1) afin d'obtenir un signal de flux ionique (a) correspondant, et comprenant des moyens de commande (6, 7) pour interpréter le signal de flux ionique (a) obtenu et pour générer au moins un signal de commande en fonction du signal de flux ionique (a) afin de réguler le déroulement de la combustion dans la chambre de combustion (9) pendant un cycle de combustion qui suit,
**caractérisé en ce**
**que** le dispositif est configuré de telle sorte que la mesure du flux ionique et l'interprétation du signal de flux ionique (a) ainsi obtenu sont respectivement effectuées pour chaque cycle de combustion individuel de la chambre de combustion (9) du moteur à combustion interne.

9. Dispositif selon la revendication 8, **caractérisé en ce que** le dispositif est configuré pour mettre en oeuvre le procédé selon l'une des revendications 1 à 7.
